# EUROPÄISCHE PATENTSCHRIFT

(11) **EP 3 127 416 B1**
(45) Veröffentlichungstag und Bekanntmachung des Hinweises auf die Patenterteilung: **28.03.2018**
(21) Anmeldenummer: 16182338.0
(22) Anmeldetag: 02.08.2016
(51) Int. Cl.: A01C 23/00

(54) **SCHNECKENVERTEILER**
SCREW DISTRIBUTOR
DISTRIBUTEUR A VIS SANS FIN

(30) Priorität: 04.08.2015 DE 202015104066 U
(43) Veröffentlichungstag der Anmeldung: 08.02.2017
(73) Patentinhaber: Fliegl sen., Josef, 84556 Kastl (DE)
(72) Erfinder: Fliegl sen., Josef, 84556 Kastl (DE)
(74) Vertreter: Tetzner, Michael

(56) Entgegenhaltungen:
- EP-A1- 0 772 965
- CH-A5- 650 898
- DE-U1- 9 107 622
- DE-U1-202004 008 476

## Beschreibung

Die Erfindung betrifft einen Schneckenverteiler, insbesondere zur Verteilung von Gülle, mit einem Verteilerrohr, dass an einem Ende eine Zuführöffnung und über seine Länge verteilt eine Vielzahl von Auslauföffnungen aufweist sowie einer im Verteilerrohr angeordneten und über eine Antriebswelle antreibbaren Förderschnecke.
Aus der DE 296 09 874 U1 ist ein Gülleverteiler mit einem Verteilerrohr bekannt, der mit einem Güllevorratsbehälter verbindbar ist und mit einer Vielzahl zur Ackerfläche ausgerichteten Auslauföffnungen versehen ist. Der untere Teil des Verteilerrohres wird durch zwei übereinanderliegende Halbschalen gebildet, die jeweils die gleiche Anzahl von Auslauföffnungen im gleichen Abstand aufweisen. Durch Verschiebung der beiden Halbschalen zueinander, können die Auslauföffnungen der äußeren Halbschale entweder ganz abgedeckt oder teilweise oder vollständig durch die Auslauföffnungen der inneren Halbschalen freigegeben werden. Auf diese Weise lässt sich der Gülleaustrag steuern. Da die auszubringende Gülle auch Feststoffe enthält, die immer wieder Verstopfungen der Auslassöffnungen versuchen können, wird in der DE 296 09 874 U1 vorgeschlagen, die Verstellung der beiden Halbschalen durch ein hin- und herbewegbares Verstellelement auszuführen.
Die EP 0 772 965 A1 betrifft einen Gülleverteiler mit einem Verteilerrohr, das an einem Ende eine Zuführöffnung und über seine Länge verteilt eine Vielzahl von Auslauföffnungen aufweist sowie einer im Verteilerrohr angeordneten und über eine Antriebswelle antreibbaren Förderschnecke. Ferner ist ein Rotor mit einer Vielzahl von Schneidblättern zur Zerkleinerung der Gülle vorgesehen.
Durch die Umstellung der Rinderställe auf Liegeboxen mit Stroheinstreu gelangt zum Teil relativ viel Stroh mit in die Güllegrube. Das Stroh und auch diverse Futterreste machen es zwingend erforderlich, dass die Gülle vor dem Ausbringen zerkleinert wird, um verstopfte Ausbringöffnungen weitgehend zu vermeiden.

Aus der CH 650 898 A5 ist ferner ein Mischzerkleinerer mit einem Kreuzdrehmesser und einer Gegenschneidplatte mit einer Vielzahl von Durchlässen bekannt.
Der Erfindung liegt nun die Aufgabe zugrunde, dass Aufbereiten und Ausbringen der Gülle zu vereinfachen.

Erfindungsgemäß wird diese Aufgabe durch einen Schneckenverteiler gemäß dem Anspruch 1 gelöst.

Vorteilhafte Ausgestaltungen der Erfindung sind Gegenstand der weiteren Ansprüche.

Der erfindungsgemäße Schneckenverteiler ist insbesondere zur Verteilung von Gülle geeignet und weist ein Verteilerrohr auf, dass an einem Ende eine Zuführöffnung und über seine Länge verteilt eine Vielzahl von Auslauföffnungen aufweist, wobei eine im Verteilerrohr angeordnete und über eine Antriebswelle antreibbare Förderschnecke vorgesehen ist und weiterhin zwischen Zuführöffnung und Förderschnecke eine Zerkleinerungseinrichtung mit wenigstens einem rotierenden Schneidelement angeordnet ist, wobei das Schneidelement drehfest mit der die Förderschnecke antreibenden Antriebswelle gekoppelt ist.

Durch den erfindungsgemäßen Schneckenverteiler kann die bisher in einem separaten Gerät durchgeführte Zerkleinerung und das Ausbringen der Gülle in einem Arbeitsgang durchgeführt werden. Darüber hinaus ist für die Zerkleinerung und den Antrieb der Förderschnecke nur ein Antrieb, insbesondere ein Ölmotor, erforderlich.

Die Zerkleinerungseinrichtung ist dabei zwischen einer Vorkammer und einer Verteilerkammer angeordnet sein und weist eine Schneidplatte auf, die mit wenigstens einem rotierenden Schneidelement zusammenwirkt. Die Schneidplatte weist dabei eine Vielzahl von Öffnungen auf, die eine Verbindung zwischen der Vorkammer und der Verteilerkammer darstellen. Durch die Größe der Öffnungen kann die maximale Größe der in die Verteilerkammer gelangenden Feststoffe definiert werden. Durch die rotierenden Schneidmesser wird der Großteil der Feststoffe soweit zerkleinert, dass ein Verstopfen der Auslauföffnungen weitgehend vermieden werden kann. Eine besonders effektive Zerkleinerung hat sich dadurch ergeben, dass die Öffnungen der Schneidplatte schneckenförmig um die Drehachse des wenigstens einen rotierenden Schneidelements angeordnet sind.

Gemäß einer bevorzugten Ausgestaltung der Erfindung ist das Verteilerrohr in eine Vorkammer, welche die Zuführöffnung aufweist, und eine Verteilerkammer, welche die Förderschnecke und die Vielzahl der Auslauföffnungen aufweist, aufgeteilt. Die Schneidplatte selbst wird vorzugsweise aus einem Verschleißblech aus Stahl gefertigt.

Gemäß einer bevorzugten Ausgestaltung der Erfindung ist die Vorkammer mit einem Auffangkasten für nicht zerkleinerbare Fremdkörper ausgestattet, der mit einer Entleerungsöffnung versehen ist, die manuell oder hydraulisch geöffnet werden kann. Der Auffangkasten ist dabei insbesondere unterhalb der Zerkleinerungseinrichtung angeordnet, sodass etwaige nicht zerkleinerbare Fremdkörper der Schwerkraft folgend in den Auffangkasten gelangen. Darüber hinaus kann auch an dem von der Zuführöffnung entfernten Ende des Verteilerrohres ein zweiter Auffangkasten für Fremdkörper angeordnet werden, der ebenfalls mit einer Entleerungsöffnung versehen ist. Die Antriebswelle zum Antreiben der Förderschnecke und des wenigstens einen rotierenden Schneidelements ist zweckmäßigerweise mit einem außerhalb des Verteilerrohres gehalterten Antrieb, insbesondere einem Ölantrieb, gekoppelt.

Weitere Ausgestaltungen der Erfindung werden anhand der nachfolgenden Beschreibung und der Zeichnung näher erläutert.

In der Zeichnung zeigen
- Fig. 1: eine geschnittene, dreidimensionale Ansicht des Schneckenverteilers,
- Fig. 2: eine teilweise geschnittene Seitenansicht des Schneckenverteilers und
- Fig. 3: eine Draufsicht auf die Zerkleinerungseinrichtung.

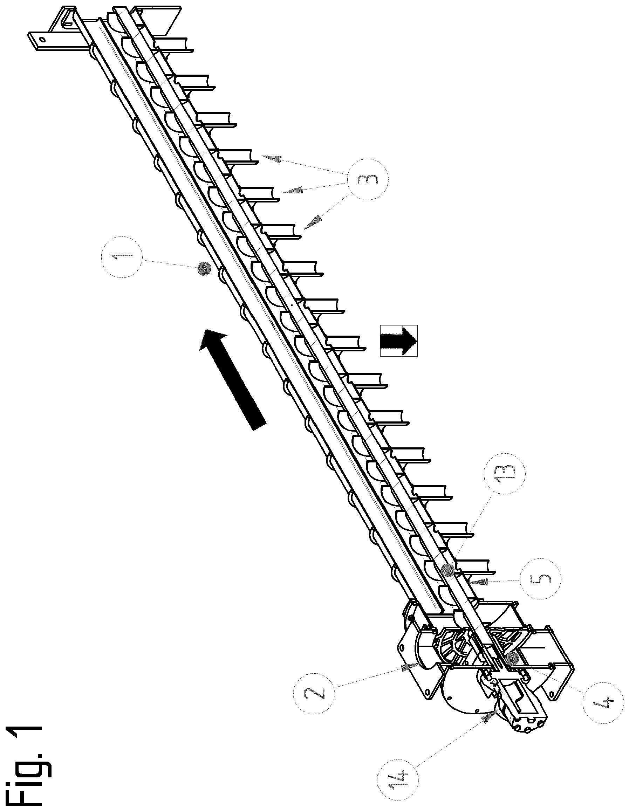

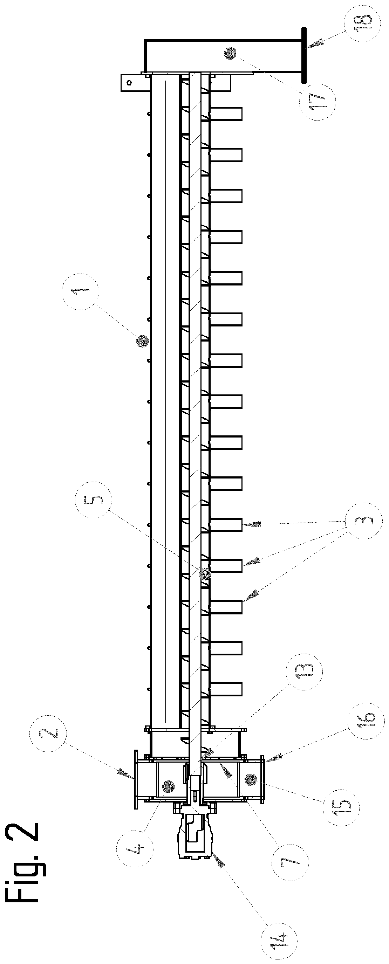

Der in den Figuren 1 und 2 dargestellte Schneckenverteiler ist insbesondere zur Verteilung von Gülle geeignet und weist ein Verteilerrohr 1 auf, das an einem Ende eine Zuführöffnung 2 und über seine Länge verteilt eine Vielzahl von Auslauföffnungen 3 vorsieht. Das Verteilerrohr 1 ist in einer Vorkammer 4 und eine Verteilerkammer 5 aufgeteilt. Die Zuführöffnung 2 ist dabei in der Vorkammer 4 vorgesehen und in der Verteilerkammer ist über seine Länge eine Förderschnecke 6 angeordnet, um die Gülle auf die Auslauföffnungen 3 zu verteilen. Die Auslauföffnungen sind mit gleichem Abstand voneinander auf der Unterseite des Verteilerrohres über die gesamte Länge angeordnet und werden beispielsweise durch kurze Auslaufstutzen gebildet, an denen nicht dargestellte Schlauchstücke angebracht sind.

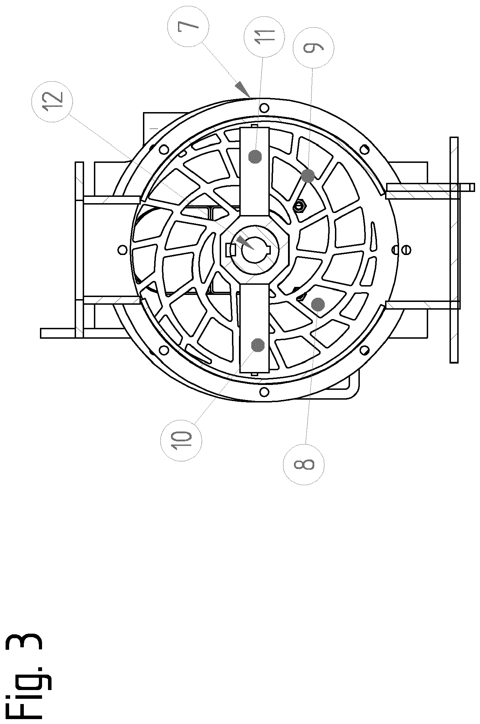

Zwischen der Vorkammer 4 und der Verteilerkammer 5 ist eine Zerkleinerungseinrichtung 7 angeordnet, die eine mit einer Vielzahl von Öffnungen 8 versehene Schneidplatte 9 aufweist, die im dargestellten Ausführungsbeispiel mit zwei rotierenden Schneideelementen 10, 11 zusammenwirkt. Die Öffnungen werden dabei von den Schneidelementen überstrichen und stellen die Verbindung zwischen der Vorkammer und der Verteilerkammer 5 dar. Die Schneidplatte 9 wird beispielsweise aus einem Verschleißblech aus Stahl gefertigt, sodass in Verbindung mit den rotierenden Schneidelementen, die beispielsweise als Schneidmesser ausgebildet sind, eine sehr effiziente Zerkleinerung der Gülle gewährleistet ist. Wie insbesondere aus Fig. 3 zu ersehen ist, sind die Öffnungen 8 der Schneidplatte 9 schneckenförmig um eine Drehachse 12 der beiden rotierenden Schneideelemente 10, 11 angeordnet, wobei die Drehachse 12 mit der Drehachse der Antriebswelle 13 der Förderschnecke übereinstimmt. Die beiden Schneidelemente 10, 11 sind drehfest mit der die Förderschnecke 6 antreibenden Antriebswelle 13 gekoppelt, sodass für die Schneidelemente und die Förderschnecke lediglich ein Antrieb 14 erforderlich ist. Im dargestellten Ausführungsbeispiel wird der Antrieb 14 beispielsweise durch einen Ölmotor gebildet, der an einer Außenwandung der Vorkammer 4 gehaltert ist.

Gemäß einer weiteren Ausgestaltung der Erfindung weist die Vorkammer 4 einen Auffangkasten 15 auf, der unterhalb der Zerkleinerungseinrichtung 7 angeordnet ist, sodass etwaige nicht zerkleinerbare Fremdkörper der Schwerkraft folgend in den Auffangkasten gelangen. Dieser Auffangkasten 15 ist mit einer Entleerungsöffnung 16 versehen, die beispielsweise manuell oder hydraulisch geöffnet werden kann. An dem von der Zuführöffnung 2 entfernten Ende des Verteilerrohres 1 ist zudem ein zweiter Auffangkasten 17 für Fremdkörper angeordnet, um Fremdkörper auszuschleusen, die zwar in die Verteilerkammer gelangt sind, aber nicht durch die Auslauföffnungen 3 ausgetragen wurden. Auch dieser Auffangkasten 17 ist mit einer Entleerungsöffnung versehen.

Im Betrieb gelangt die Gülle 2 über die Zuführöffnung 2 in die Vorkammer 4, wird dort durch die Zerkleinerungseinrichtung zerkleinert und gelangt in die Verteilerkammer, wo sie über die Förderschnecke 6 weitergefördert und den einzelnen Auslauföffnungen 3 übergeben wird. Fremdkörper die von der Zerkleinerungseinrichtung 7 nicht abgefangen wurden, fördert die Förderschnecke 6 bis zum Ende des Verteilerrohres 1, wo sie in dem zweiten Auffangkasten 17 gelangen.

## Patentansprüche

1. Schneckenverteiler, insbesondere zur Verteilung von Gülle, mit einem Verteilerrohr (1), das an einem Ende eine Zuführöffnung (2) und über seine Länge verteilt eine Vielzahl von Auslauföffnungen (3) aufweist sowie einer im Verteilerrohr (1) angeordneten und über eine Antriebswelle (13) antreibbaren Förderschnecke (6),
wobei zwischen Zuführöffnung (2) und Förderschnecke (6) einer Zerkleinerungseinrichtung (7) mit wenigstens einem rotierenden Schneidelement (10, 11) angeordnet ist, wobei das Schneidelement drehfest mit der die Förderschnecke (6) antreibenden Antriebswelle (13) gekoppelt ist,
**dadurch gekennzeichnet, dass** die Zerkleinerungseinrichtung (7) eine Schneidplatte (9) aufweist, die mit dem wenigstens einen rotierenden Schneidelement (10, 11) zusammenwirkt und die Schneidplatte (9) mit einer Vielzahl von Öffnungen (8) versehen ist, die eine Verbindung zwischen einer Vorkammer (4) und einer Verteilerkammer (5) darstellen, wobei die Öffnungen (8) der Schneidplatte (9) schneckenförmig um eine Drehachse (12) des wenigstens einen rotierenden Schneidelements (10, 11) angeordnet sind.

2. Schneckenverteiler nach Anspruch 1, **dadurch gekennzeichnet, dass** das Verteilerrohr in die Vorkammer (4), welche die Zuführöffnung (2) aufweist, und die Verteilerkammer (5), welche die Förderschnecke (6) und die Vielzahl der Auslauföffnungen (3) aufweist, aufgeteilt ist.

3. Schneckenverteiler nach Anspruch 1, **dadurch gekennzeichnet, dass** das die Zerkleinerungseinrichtung (7) zwischen der Vorkammer (4) und der Verteilerkammer (5) angeordnet ist.

4. Schneckenverteiler nach Anspruch 1, **dadurch gekennzeichnet, dass** die Schneidplatte (9) aus einem Verschleißblech aus Stahl gefertigt ist.

5. Schneckenverteiler nach Anspruch 2, **dadurch gekennzeichnet, dass** die Vorkammer (4) einen Auffangkasten (15) für nicht zerkleinerbare Fremdkörper aufweist, der mit einer Entleerungsöffnung (16) versehen ist.

6. Schneckenverteiler nach Anspruch 5, **dadurch gekennzeichnet, dass** der Auffangkasten (15) unterhalb der Zerkleinerungseinrichtung (7) angeordnet ist, sodass etwaige nicht zerkleinerbare Fremdkörper der Schwerkraft folgend in den Auffangkasten (15) gelangen.

7. Schneckenverteiler nach einem oder mehreren der vorhergehenden Ansprüche,
**dadurch gekennzeichnet, dass** die Antriebswelle (13) zum Antreiben der Förderschnecke mit einem außerhalb des Verteilerrohres (1) gehalterten Antrieb (14) gekoppelt ist.

8. Schneckenverteiler nach einem oder mehreren der vorhergehenden Ansprüche,
**dadurch gekennzeichnet, dass** an dem von der Zuführöffnung (2) entfernten Ende des Verteilerrohres (1) ein zweiter Auffangkasten (17) für Fremdkörper angeordnet ist.

## Claims

1. A screw distributor, in particular for distributing manure, having a distribution pipe (1) which has a feed opening (2) at one end, a plurality of discharge openings (3) distributed over its length, and a screw conveyor (6) that is situated in the distribution pipe (1) and drivable via a drive shaft (13),
wherein a comminution device (7), having at least one rotating cutting element (10, 11), is situated between the feed opening (2) and the screw conveyor (6), the cutting element being rotatably fixedly coupled to the drive shaft (13) that drives the screw conveyor (6),
**characterized in that** the comminution device (7) has a cutting plate (9) that cooperates with the at least one rotating cutting element (10, 11), and the cutting plate (9) is provided with a plurality of openings (8) that represent a connection between a prechamber (4) and a distribution chamber (5), the openings (8) in the cutting plate (9) being arranged in a spiral shape around the rotational axis (12) of the at least one rotating cutting element (10, 11).

2. The screw distributor according to Claim 1, **characterized in that** the distribution pipe is divided into the prechamber (4) which has the feed opening (2), and the distribution chamber (5) which has the screw conveyor (6) and the plurality of discharge openings (3).

3. The screw distributor according to Claim 1, **characterized in that** the comminution device (7) is situated between the prechamber (4) and the distribution chamber (5).

4. The screw distributor according to Claim 1, **characterized in that** the cutting plate (9) is manufactured from a wear plate made of steel.

5. The screw distributor according to Claim 2, **characterized in that** the prechamber (4) has a collection hopper (15) for noncomminutable foreign bodies, which is provided with a removal opening (16).

6. The screw distributor according to Claim 5, **characterized in that** the collection hopper (15) is situated beneath the comminution device (7), so that any noncomminutable foreign bodies pass into the collection hopper (15) due to the force of gravity.

7. The screw distributor according to one or more of the preceding claims, **characterized in that** the drive shaft (13) for driving the screw conveyor is coupled to a drive (14) that is mounted outside the distribution pipe (1).

8. The screw distributor according to one or more of the preceding claims, **characterized in that** a second collection hopper (17) for foreign bodies is situated at the end of the distribution pipe (1) remote from the feed opening (2).

## Revendications

1. Distributeur à vis sans fin, en particulier pour la distribution de lisier, ledit distributeur à vis sans fin comprenant un tuyau distributeur (1) qui, au niveau d'une extrémité, présente une ouverture d'alimentation (2) et une multiplicité d'ouvertures de sortie (3) réparties sur la longueur dudit tuyau distributeur, et comprenant également une vis sans fin transporteuse (6) disposée dans le tuyau distributeur (1) et pouvant être commandée par un arbre d'entraînement (13),
où un dispositif de broyage (7) comprenant au moins un élément de coupe rotatif (10, 11) est disposé entre l'ouverture d'alimentation (2) et la vis sans fin transporteuse (6), où l'élément de coupe est couplé à l'arbre d'entraînement (13) commandant la vis sans fin transporteuse (6), ledit élément de coupe étant solidaire en rotation avec ledit arbre d'entraînement,
**caractérisé en ce que** le dispositif de broyage (7) présente une plaque de coupe (9) qui fonctionne de façon conjointe avec l'élément de coupe rotatif (10, 11) au moins au nombre de un, et la plaque de coupe (9) est dotée d'une multiplicité d'ouvertures (8) qui représentent une communication entre une préchambre (4) et une chambre de distribution (5), où les ouvertures (8) de la plaque de coupe (9) sont disposées de façon hélicoïdale autour d'un axe de rotation (12) de l'élément de coupe rotatif (10, 11) au moins au nombre de un.

2. Distributeur à vis sans fin selon la revendication 1,
**caractérisé en ce que** le tuyau distributeur est subdivisé et passe dans la préchambre (4) qui présente l'ouverture d'alimentation (2) et passe dans la chambre de distribution (5) qui présente la vis sans fin transporteuse (6) et la multiplicité d'ouvertures de sortie (3).

3. Distributeur à vis sans fin selon la revendication 1,
**caractérisé en ce que** le dispositif de broyage (7) est disposé entre la préchambre (4) et la chambre de distribution (5).

4. Distributeur à vis sans fin selon la revendication 1,
**caractérisé en ce que** la plaque de coupe (9) est fabriquée en se composant d'une tôle d'usure en acier.

5. Distributeur à vis sans fin selon la revendication 2,
**caractérisé en ce que** la préchambre (4) présente un bac de récupération (15) pour des corps étrangers ne pouvant pas être broyés, lequel bac de récupération est doté d'une ouverture d'évacuation (16).

6. Distributeur à vis sans fin selon la revendication 5,
**caractérisé en ce que** le bac de récupération (15) est disposé au-dessous du dispositif de broyage (7), de sorte que d'éventuels corps étrangers ne pouvant pas être broyés parviennent dans le bac de récupération (15) sous l'effet de la force de gravité.

7. Distributeur à vis sans fin selon l'une quelconque ou plusieurs des revendications précédentes, **caractérisé en ce que** l'arbre d'entraînement (13) servant à la commande de la vis sans fin transporteuse est couplé à un entraînement (14) fixé à l'extérieur du tuyau distributeur (1).

8. Distributeur à vis sans fin selon l'une quelconque ou plusieurs des revendications précédentes, **caractérisé en ce qu'**un deuxième bac de récupération (17) prévu pour des corps étrangers est disposé au niveau de l'extrémité du tuyau distributeur (1), ladite extrémité étant éloignée de l'ouverture d'alimentation (2).
